# EUROPEAN PATENT SPECIFICATION

(11) **EP 2 007 071 B1**
(45) Date of publication and mention of the grant of the patent: **03.08.2011**
(21) Application number: 07702175.6
(22) Date of filing: 23.01.2007
(51) Int. Cl.: H04L 12/26

(54) **AN EMULATION TEST DEVICE AND METHOD**
EMULATIONSTESTEINRICHTUNG UND VERFAHREN
DISPOSITIF ET PROCÉDÉ D'ÉMULATION DE TEST

(30) Priority: 13.04.2006 CN 200610066626
(43) Date of publication of application: 24.12.2008
(73) Proprietor: Huawei Technologies Co., Ltd., Longgang District, Shenzhen Guangdong 518129 (CN)
(72) Inventor: ZHANG, Fuwang, Guangdong 518129 (CN); XU, Guijin, Guangdong 518129 (CN)
(74) Representative: Hengelhaupt, Jürgen
(86) International application number: PCT/CN2007/000246
(87) International publication number: WO 2007/118390

(56) References cited:
- EP-A- 1 175 078
- EP-A- 1 619 830
- WO-A-02/099567
- CN-A- 1 538 671
- CN-A- 1 750 485
- CN-Y- 2 631 133
- US-A1- 2003 048 756
- US-A1- 2005 068 972

## Description

### FIELD OF THE INVENTION

The present invention relates to x Digital Subscriber Line family (xDSL), and more particular, to a device and a method for emulation and test used in xDSL service.

### BACKGROUND

With the increasing maturity and development of the xDSL technology, xDSL technology has been more and more widely adopted in the technical field of broadband network access. Currently, the xDSL technology for broadband network access mainly includes three technologies, namely, Asymmetric Digital Subscriber Line/Asymmetric Digital Subscriber Line 2+ (ADSL/ADSL2+), Very High Speed Digital Subscriber Line (VDSL), and Symmetric High-speed Digital Subscriber Line (SHDSL). Digital Subscriber Line Access Multiplexer (DSLAM), functioning as an access aggregating device, may provide users with a high speed access to broadband network using different technologies, based on the difference between user requirements and the real line conditions.

In the case of a relatively far distance from the user, ADSL/ADSL2+ technology may be employed to provide users with access to broadband network.

In the case of a very short distance from the user, VDSL technology may be employed to provide users with a high speed access to broadband network.

In the case when the user requires a symmetrical upstream and downstream service, SHDSL technology may be used to provide a broadband network access with a symmetrical upstream and downstream traffic for the users.

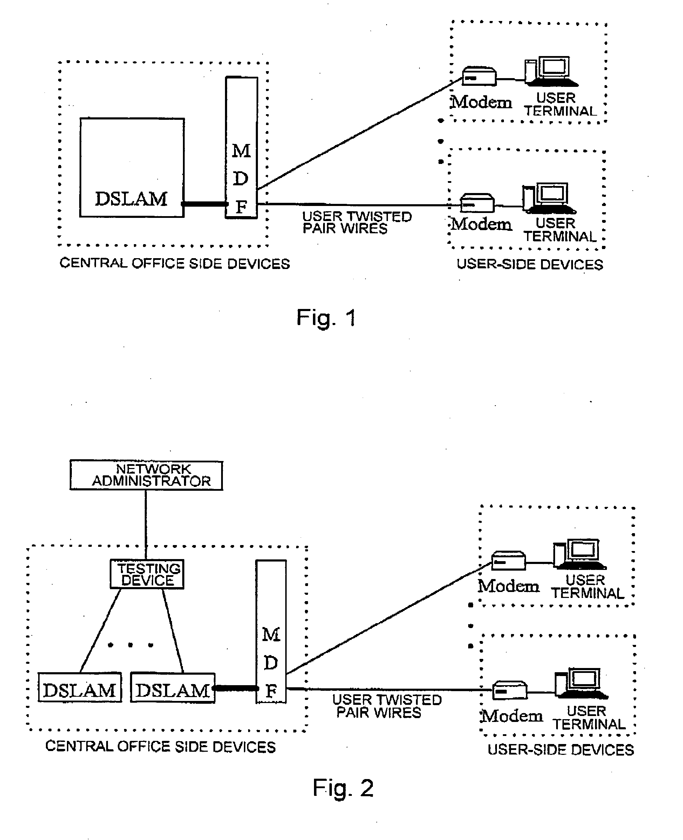

Figures 1 is a prior art diagram in which users access a DSLAM device. Usually, a user terminal 102 couples to the DSLAM device 110 via MODEM 104, twisted pair 106, Main Distributing Frame (MDF) 108, wherein the user terminal 102 and MODEM 104 belong to user-side devices 100, while the MDF 108 and DSLAM 110 belong to Central Office end devices 101, and twisted pair may be incorporated with a variety of technologies.

With the constant and rapid growth of the broadband network, there are increasing conflicts between the existing manual maintenance and test, and the development of the scale of the network. As a result, a variety of testing technologies emerge. As can be seen from Figure 1, when any fault occurs during user's access to the broadband network, three main parts, i.e., user-side MODEM, twisted pair connecting the user and the DSLAM, and DSLAM, need to be diagnosed. The so called emulation test primarily tests the user-side MODEM and Central Office side DSLAM. Usually, the test of user-side MODEM is often referred to as the emulation test of xDSL transceiver unit-remote end (xTU-R). The test of DSLAM is often referred to as the emulation test of xDSL Transceiver Unit-Central Office (xTU-C).

The existing xTU-C emulation test is: to replace the original DSLAM port with another DSLAM port to connect and activate the user MODEM so as to determine if there is any problem with the DSLAM port. The details are described below.

It is assumed that the user MODEM is now connecting to port A of the DSLAM via twisted pair. An error occurs when the user connects to the broadband network. At this point, the DSLAM directs the subscriber line to port B of the DSLAM. If the user MODEM can be correctly activated with port B of the DSLAM, it is determined that the original port A of the DSLAM connecting the user is at fault. If the user MODEM could not be correctly activated with port B either, it is roughly determined that it is the user's twisted pair or the user's MODEM that impairs the correct user access. For the users with ADSL/ADSL2+, VDSL, SHDSL, test can be done by selecting the DSLAM ports of the same manner according to the different approaches for user access.

The existing xTU-R emulation test is to replace the original MODEM with another MODEM to connect and active the DSLAM corresponding to the user so as to determine if the user MODEM is in a normal state. The specific procedure is similar to that of the xTU-C emulation test, which is omitted herein for brevity.

It can be seen that the existing xTU-C and xTU-R emulation tests are relatively independent of each other. One can not carry out both xTU-C emulation test and xTU-R emulation test for the user-side MODEM at the same location (physical location). Moreover, the xTU-C emulation test is operated, the resources, i.e., the DSLAM ports, are taken up, which means that DSLAMs with different chassis or DSLAMs by different manufacturers may not be able to share DSLAM ports for testing so that each chassis requires a free DSLAM port for testing and thus the resources of the DSLAM ports are wasted.
EP 1619830 A provides a method for testing and locating failure of a DSL loop upon the condition that an activation handshake process cannot be performed between CO and CPE. A BTS test board is configured in a DSLAM (or in other related broadband device), and the BTS test board includes a CO simulation unit and a CPE simulation unit. Under a line switchover carried out by a relay, the CO simulation unit and the CPE simulation unit can respectively replace the CO or the CPE to perform simulating test. While simulating the CO, the relay controls the CPE to disconnect from the CO port, and instead; to connect to the simulated CO port on the BTS test board, and then the CO simulation unit carries out a simulating test to obtain the activation parameters, which mainly includes: line operating mode, channel mode, delay of upstream and downstream interleaving channel, target noise margin for upstream and downstream, maximum, and minimum rates of upstream and downstream, and etc. While simulating the CPE, the relay controls the CO to disconnect from the CO port, and instead, to connect to the simulated CPE port on the BST test board, and then the CPE simulation unit carries out a simulating test to obtain activation parameters.
US 2003/048756 A1 provides a portal test set which is capable of performing line qualification testing and connectivity testing.
WO 02/099567 A provides a method for remotely testing a communication network that provisions DSL service to a customer. In the communication network in which the method is applied, a CO test head and a RT test head are respectively configured in central office (CO) and remote terminal (RT), in addition, a test controller and central database are provided in the network, and the test controller is connected to the CO. According to the method, network address and modem parameters of the custom's modem are retrieved from the central database, and provided to the modem of the edge gateway. Under the control of the test controller, synchronization testing is performed between the modem of the custom and the modem of the edge gateway, as well as between the modem of the edge gateway and the modem of the RT test head, so as to locating the failure of the network. Moreover, if synchronization can be acquired in both of the above synchronization testing, data/voice network testing is further initiate from the edge gateway under the control of the RT test head.

### SUMMARY

Accordingly, an embodiment of the present invention provides a device for emulation test. Another embodiment of the present invention provides a method for emulation test. These embodiments enable the xDSL service to perform both the xTU-C emulation test and the xTU-R emulation test for the user-side MODEM at the same location when the xDSL service is conducting the emulation test.

To accomplish the above objects, the technical solutions according to the embodiments of the present invention can be implemented as below.

A device for emulation test includes a communication module and a testing module. The communication module is configured to acquire information to be tested comprising a serial number of a digital subscriber line access multiplexer, DSLAM, chassis, slot and port corresponding to a line to be tested according to a test command received from a test initiator, communicate with the DSLAM to acquire a type of the DSLAM port to be tested or MODEM information according to the serial number of the DSLAM, inform a wire-grabbing device in a system to connect a line to be tested to the testing module based on the test command, transmit an emulation test command including the type of the DSLAM port to be tested or MODEM information to the testing module, and return the testing result received from the testing module to the initiator of the external test. The testing module performs emulation test according to the received test command.

A method for emulation test includes steps of:
acquiring, by a testing device, information to be tested according to a received test command and acquiring, the information to be tested comprising a serial number of a digital subscriber line access multiplexer, DSLAM, chassis, slot and port corresponding to a line to be tested;
communicating, by the testing device, with the DSLAM to acquire a type of the DSLAM port to be tested or the MODEM information according to the serial number of the DSLAM;
informing, by the testing device, a wire-grabbing device to connect the line to be tested to the testing device, performing the emulation test according to the information to be tested and the type of the DSLAM port to be tested, or the information to be tested and the MODEM information; and
reporting the testing results.

It can be seen from the foregoing embodiments of the present invention that the testing device acquires information to be tested according to the received test command and acquires the type of the DSLAM port to be tested or the MODEM information according to the information to be tested. Subsequently, the testing device informs a wire-grabbing device to connect the line to be tested to the testing device, performs a corresponding xTU-C or xTU-R emulation test according to the information to be tested and the type of port to be tested and reports the testing result. Accordingly, both the xTU-C emulation test and the xTU-R emulation test for the user-side MODEM can be performed at the same location.

### BRIEF DESCRIPTION OF THE DRAWINGS

Figure 1 is a schematic diagram of a system for user's access to the DSLAM device in the prior art;

Figure 2 is a schematic diagram of an user access system, including the testing device, according to an embodiment of the present invention;

Figure 3 is a schematic architecture of the testing device according to an embodiment of the present invention;

Figure 4 is a schematic architecture of the testing module in the testing device according to an embodiment of the present invention; and

Figure 5 is a schematic flow chart of implementing the emulation test according to another embodiment of the present invention.

### DETAILED DESCRIPTION

Detailed description is given below to the embodiments of the present invention in conjunction with the drawings.

As illustrated in Figure 2, an embodiment of the present invention configures a testing device 200 in the Central Office side device 101. The testing device 200 connects directly to a network administrator 300 and to each DSLAM 110, respectively, which is adapted to implement a variety of xTU-C and xTU-R emulation tests.

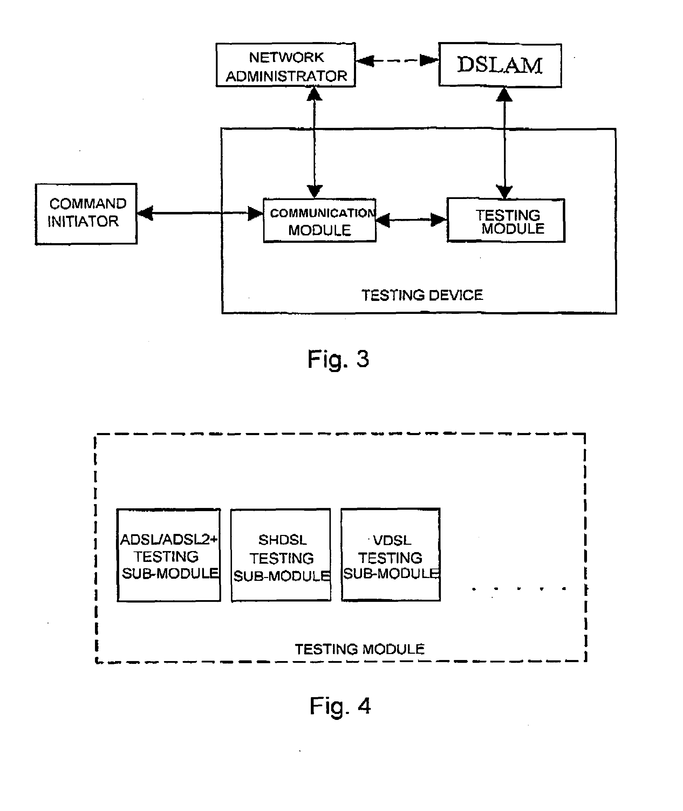

Referring to Figure 3, Figure 3 illustrates a schematic architecture of the testing device 200 according to an embodiment of the present invention. The testing device 200 includes a communication module 202 and a testing module 204, wherein the communication module 202 is configured to receive a test command from an initiator 400 of an external test, parse the received test command, acquire the information to be tested, for example, the serial number of the DSLAM 200, chassis, slot and port to which the line to be tested corresponds, acquire the type of the DSLAM port to be tested or the MODEM information from DSLAM (not shown in the figure) or the network administrator 300 of the DSLAM according to the information to be tested, inform a wire-grabbing device in the system to connect the line to be tested to the testing module 200, transmit to the testing module 200 an emulation test command including the type of the DSLAM port to be tested or the MODEM information and return the testing result received from the testing module to the initiator 400 of the external test. The testing module is configured to perform emulation test according to the received test command.

Specifically, the communication module includes a command parsing sub-module, an information acquiring sub-module and an information notification sub-module, wherein the command parsing sub-module parses the received test command, acquires information to be tested, and the information acquiring sub-module acquires the type of the DSLAM port to be tested or the MODEM information from external, such as from DSLAM or the network administrator of the DSLAM, according to the parsed information to be tested. The information notification sub-module informs the wire-grabbing device in the system to connect the line to be tested to the testing module according to the type of the DSLAM port to be tested or the MODEM information, transmits an emulation test command including the type of the DSLAM port to be tested or the MODEM information, and returns the testing result received from the testing module, to the initiator of the external test.

The foregoing types of the DSLAM ports include, but not limited to, port types of ADSL/ADSL2+, SHDSL and VDSL. The MODEM information is the information of xDSL supported by the user connected via the MODEM.

The emulation test executed by the testing module is configured to be xTU-C or xTU-R emulation test. The testing module integrates the functionality of the DSLAM port and the functionality of the user-side MODEM. In other words, the testing module has a DSLAM port testing unit and a MODEM testing unit, wherein the DSLAM port testing unit functions as the DSLAM port to be tested, and the MODEM testing unit functions as the MODEM to be tested. It is for the reason that the testing module can not only function as the DSLAM port to be tested, but also function as the MODEM to be tested, that the testing device can not only conduct the xTU-C emulation test, but also conduct the xTU-R emulation test for the user-side MODEM, which, therefore, facilitates the troubleshooting and maintenance by the maintenance personnel.

As shown in Figure 4, the above testing module 204 may include any type of xDSL testing sub-module which, for example, includes, but not limited to, ADSL/ADSL2+ testing sub-module 240, or SHDSL testing sub-module 242, or VDSL testing sub-module 244, or any combination of the foregoing testing sub-modules. Since each testing sub-module includes a corresponding type of DSLAM port testing unit and MODEM testing unit, the testing module can function as the MODEM of ADSL/DSL2+, VDSL, SHDSL user, or function as the DSLAM port in a manner of ADSL/ADSL2+, VDSL, SHDSL, so as to conduct xTU-R and xTU-C emulation test for the user that has connected into the testing device. Moreover, the testing device may provide options for supporting xTU-R, or xTU-C emulation test according to the specific situation and requirements, and may also provide options for supporting one or more types of xTU-R emulation test among ADSL/ADSL2+, VDSL, SHDSL. Alternatively, the testing device may provide options for supporting one or more types of xTU-C emulation test among ADSL/ADSL2+, VDSL, SHDSL. Apparently, since the testing module according to the embodiments of the present invention may support a variety of xDSL access technologies, the testing module may provide a plurality of DSLAMs or a plurality of types of DSLAM with a sharing port for xTU-C and xTU-R test, thus saving the resources of DSLAM ports.

The method for implementation of the emulation test is detailed below.

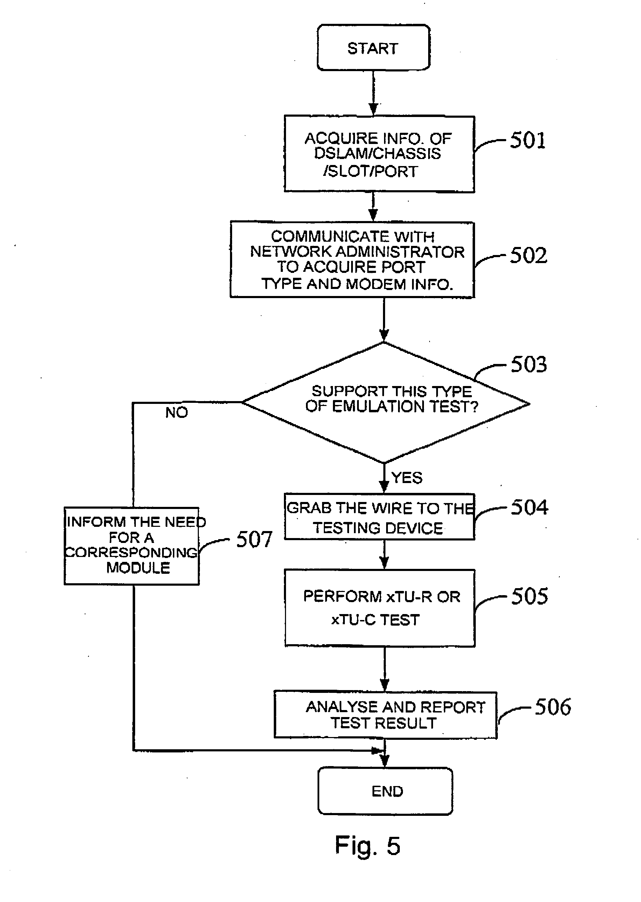

Referring to Figure 5, Figure 5 illustrates a schematic flowchart for implementing the emulation test according to anther embodiment of the present invention.

Step 501: The testing device acquires the information to be tested according to the received testing commands. The information to be tested is the serial number of DSLAM, chassis, slot and port to which the line to be tested corresponds.

Step 502: The testing device communicates with the network administrator of the DSLAM to acquire the information of the type of the DSLAM port to be tested or the MODEM information. Alternatively, the testing device may communicate with the DSLAM to acquire the type of the DSLAM port to be tested or the MODEM information according to the serial number of DSLAM (this situation is not illustrated in Figure 5). The type of the ports to be tested includes, but not limited to, ADSL/ADSL2+, SHDSL and VDSL, which means that it can be of any type of xDSL. The MODEM information is the information of xDSL supported by the user connected via the MODEM.

Step 503: The testing device determines whether the testing device itself has a testing sub-module corresponding to the type of DSLAM port to be tested or the MODEM information. If it has, Step 504 is performed; otherwise, Step 507 is performed.

Step 504: Informing the wire-grabbing device to connect the line to be tested to the testing device. The wire-grabbing device may be a network administrator or other wire-grabbing device.

Step505: The testing device performs emulation test according to the information to be tested, and the type of DSLAM port to be tested or the MODEM information. The emulation test may be an xTU-C or xTU-R emulation test.

Step 506: A testing result is analyzed and reported. The process ends.

Step 507: A testing report including a value representative of the cause of failure is returned. The process ends. The value representative of the cause of failure may be set according to the actual application. For example, the testing device requires to be provided with a corresponding testing sub-module, etc.

The foregoing teachings are merely preferred embodiments of the present invention. It shall be noted that any improvement and modification can be made by one of the ordinary people skilled in the art without departing from the principle of the present invention. These improvement and modification shall be construed as being within the scope of protection of the present invention.

## Claims

1. A device for emulation test, **characterized in** comprising:
a communication module (202), configured to acquire information to be tested comprising a serial number of a digital subscriber line access multiplexer, DSLAM, chassis, slot and port corresponding to a line to be tested according to a test command received from a test initiator (400), communicate with the DSLAM to acquire a type of the DSLAM port to be tested or MODEM information according to the serial number of the DSLAM, inform a wire-grabbing device to connect a line to be tested to a testing module in response to the test command, transmit an emulation test command including the type of the DSLAM port to be tested or MODEM information to the testing module, and return a testing result received from the testing module to the test initiator (400); and
the testing module (204), configured to perform the emulation test according to the emulation test command.

2. The device of claim 1, **characterized in that** the communication module (202) comprises:
a command parsing sub-module, configured to parse the emulation test command and acquire information to be tested;
an information acquiring sub-module, configured to acquire, the type of the DSLAM port to be tested or the MODEM information to be tested, according to the information to be tested acquired by the command parsing sub-module;
an information notification sub-module, configured to inform the wire-grabbing device to connect the line to be tested to the testing module according to the type of the DSLAM port to be tested or the MODEM information, transmit the emulation test command including the type of the DSLAM port to be tested or the MODEM information to the testing module, and return the testing result received from the testing module to the test initiator.

3. The device of claim 1, **characterized in that** the testing module (204) comprises a DSLAM port testing unit and a MODEM testing unit, wherein the DSLAM port testing unit is configured to function as the DSLAM port to be tested, and the MODEM testing unit is configured to function as the MODEM to be tested.

4. The device of one of claims 1 to 3, **characterized in that** the testing module (204) comprises a plurality of xDSL testing sub-modules, or any combination of all of the xDSL testing sub-modules.

5. The device of one of claims 1 to 3, **characterized in that** the testing module (204) is further configured to perform xTU-C emulation test or xTU-R emulation test.

6. The device of claim 2 or 3, **characterized in that** the command parsing sub-module is further configured to acquire a serial number of DSLAM, chassis, slot and port to which the line to be tested corresponds as the information to be tested.

7. The device of claim 2 or 3, **characterized in that** the information acquiring sub-module is further configured to acquire the type of the DSLAM port which comprises all types of xDSL and the MODEM information which is the information of xDSL supported by a user connected via the MODEM.

8. A method for emulation test, **characterized in** comprising steps of:
acquiring (501), by a testing device, information to be tested according to a received test command, the information to be test comprising a serial number of a digital subscriber line access multiplexer, DSLAM, chassis, slot and port corresponding to a line to be tested;
communicating (502), by the testing device, with the DSLAM to acquire a type of the DSLAM port to be tested or MODEM information according to the serial number of the DSLAM;
informing (504), by the testing device, a wire-grabbing device to connect a line to be tested to the testing device, performing emulation test according to the information to be tested and type of the DSLAM port to be tested or according to the information to be tested and the MODEM information; and
reporting (506) a test result.

9. The method of claim 8, **characterized in** further comprising:
determining, by the testing device, whether the testing device has a testing sub-module corresponding to the type of the DSLAM port to be tested or the MODEM information;
performing the emulation test if the testing device has the testing sub-module corresponding to the type of the DSLAM port to be tested or the MODEM information; returning a test report including a value representative of the cause of failure if the testing device does not has the testing sub-module corresponding to the type of the DSLAM port to be tested or the MODEM information.

10. The method of claim 9, **characterized in that** the type of the DSLAM port to be tested is any type of xDSL; and the MODEM information is the information of xDSL supported by the user connected via the MODEM.

11. The method of any one of claims 9 to 10, **characterized in that** the emulation test of is xTU-C or xTU-R emulation test.

## Patentansprüche

1. Einrichtung zum Emulationstest, **dadurch gekennzeichnet, dass** sie Folgendes umfasst:
ein Kommunikationsmodul (202), das dafür ausgelegt ist, zu testende Informationen zu beschaffen, umfassend eine Seriennummer eines Digital Subscriber Line Access Multiplexer DSLAM, Chassis, Schlitz und Port entsprechend einem zu testenden Anschluss gemäß einem von einem Testinitiator (400) empfangenen Testbefehl, mit dem DSLAM zu kommunizieren, um eine Art des zu testenden DSLAM-Ports oder MODEM-Informationen gemäß der Seriennummer des DSLAM zu beschaffen, eine Wire-Grabbing-Einrichtung zu informieren, einen zu testenden Anschluss als Reaktion auf den Testbefehl mit einem Testmodul zu verbinden, einen Emulationstestbefehl, der die Art des zu testenden DSLAM-Ports oder MODEM-Informationen enthält, zu dem Testmodul zu senden und ein von dem Testmodul empfangenes Testergebnis an den Testinitiator (400) zurückzugeben; und
das Testmodul (204), das dafür ausgelegt, den Emulationstest gemäß dem Emulationstestbefehl durchzuführen.

2. Einrichtung nach Anspruch 1, **dadurch gekennzeichnet, dass** das Kommunikationsmodul (202) Folgendes umfasst:
ein Befehlsanalyse-Submodul, das dafür ausgelegt, den Emulationstestbefehl zu analysieren und zu testende Informationen zu beschaffen;
ein Informationsbeschaffungs-Submodul, das dafür ausgelegt ist, Folgendes zu beschaffen: die Art des zu testenden DSLAM-Ports oder die zu testenden MODEM-Informationen gemäß den durch das Befehlsanalyse-Submodul beschafften zu testenden Informationen;
ein Informationsbenachrichtigungs-Submodul, das dafür ausgelegt ist, die Wire-Grabbing-Einrichtung zu informieren, den zu testenden Anschluss gemäß der Art des zu testenden DSLAM-Ports oder den MODEM-Informationen mit dem Testmodul zu verbinden, den Emulationstestbefehl, der die Art des zu testenden DSLAM-Ports oder die MODEM-Informationen enthält, zu dem Testmodul zu senden und das von dem Testmodul empfangene Testergebnis an den Testinitiator zurückzugeben.

3. Einrichtung nach Anspruch 1, **dadurch gekennzeichnet, dass** das Testmodul (204) eine DSLAM-Port-Testeinheit und eine MODEM-Testeinheit umfasst, wobei die DSLAM-Port-Testeinheit dafür ausgelegt ist, als der zu testende DSLAM-Port zu fungieren und die MODEM-Testeinheit dafür ausgelegt ist, als das zu testende MODEM zu fungieren.

4. Einrichtung nach einem der Ansprüche 1 bis 3, **dadurch gekennzeichnet, dass** das Testmodul (204) mehrere xDSL-Test-Submodule oder eine beliebige Kombination aller der xDSL-Test-Submodule umfasst.

5. Einrichtung nach einem der Ansprüche 1 bis 3, **dadurch gekennzeichnet, dass** das Testmodul (204) ferner dafür ausgelegt ist, einen xTU-C-Emulationstest oder einen xTU-R-Emulationstest durchzuführen.

6. Einrichtung nach Anspruch 2 oder 3, **dadurch gekennzeichnet, dass** das Befehlanalyse-Submodul ferner dafür ausgelegt ist, als zu testende Informationen Folgendes zu beschaffen: eine Seriennummer des DSLAM, Chassis, Schlitz und Port, dem der zu testende Anschluss entspricht.

7. Einrichtung nach Anspruch 2 oder 3, **dadurch gekennzeichnet, dass** das Informationsbeschaffungs-Submodul ferner dafür ausgelegt ist, die Art des DSLAM-Ports zu beschaffen, die alle Arten von xDSL- und MODEM-Informationen umfasst, die die Informationen des durch einen über das MODEM verbundenen Benutzer unterstützten xDSL sind.

8. Verfahren zum Emulationstest, **dadurch gekennzeichnet, dass** es die folgenden Schritte umfasst:
Beschaffen (501) von zu testenden Informationen durch eine Testeinrichtung gemäß einem empfangenen Testbefehl, wobei die zu testenden Informationen Folgendes umfassen: eine Seriennummer eines Digital Subscriber Line Access Multiplexer DSLAM, Chassis, Schlitz und Port entsprechend einem zu testenden Anschluss;
Kommunizieren (502) mit dem DSLAM durch die Testeinrichtung, um eine Art des zu testenden DSLAM-Ports oder MODEM-Informationen gemäß der Seriennummer des DSLAM zu beschaffen;
Informieren (504) einer Wire-Grabbing-Einrichtung durch die Testeinrichtung, einen zu testenden Anschluss mit der Testeinrichtung zu verbinden, gemäß den zu testenden Informationen und der Art des zu testenden DSLAM-Ports oder gemäß den zu testenden Informationen und den MODEM-Informationen einen Emulationstest durchzuführen; und
Melden (506) eines Testergebnisses.

9. Verfahren nach Anspruch 8, **dadurch gekennzeichnet, dass** es ferner Folgendes umfasst:
Bestimmen durch die Testeinrichtung, ob die Testeinrichtung ein Test-Submodul aufweist, das der Art des zu testenden DSLAM-Ports oder den MODEM-Informationen entspricht;
Durchführen des Emulationstests, wenn die Testeinrichtung das Test-Submodul aufweist, das der Art des zu testenden DSLAM-Ports oder den MODEM-Informationen entspricht; Zurückgeben eines Testberichts, der einen die Ursache des Ausfalls repräsentierenden Wert enthält, wenn die Testeinrichtung das Test-Submodul, das der Art des zu testenden DSLAM-Ports oder den MODEM-Informationen entspricht, nicht aufweist.

10. Verfahren nach Anspruch 9, **dadurch gekennzeichnet, dass** die Art des zu testenden DSLAM-Ports eine beliebige Art von xDSL ist; und die MODEM-Informationen die Informationen des durch den über das MODEM verbundenen Benutzer unterstützten xDSL sind.

11. Verfahren nach einem der Ansprüche 9 bis 10, **dadurch gekennzeichnet, dass** der Emulationstest ein xTU-C- oder ein xTU-R-Emulationstest ist.

## Revendications

1. Dispositif de test d'émulation, **caractérisé en ce qu'**il comprend :
un module de communication (202), configuré pour acquérir des informations à tester comprenant un numéro de série d'un châssis, emplacement et port de multiplexeur d'accès de ligne d'abonné numérique, DSLAM, correspondant à une ligne à tester en fonction d'une commande de test reçue d'un initiateur de test (400), communiquer avec le DSLAM pour acquérir un type du port DSLAM à tester ou des informations de MODEM en fonction du numéro de série du DSLAM, informer un dispositif de saisie de ligne qu'il faut connecter une ligne à tester à un module de test en réponse à la commande de test, transmettre une commande de test d'émulation comportant le type du port DSLAM à tester ou les informations de MODEM au module de test, et renvoyer un résultat de test reçu du module de test à l'initiateur de test (400) ; et
le module de test (204), configuré pour exécuter le test d'émulation en fonction de la commande de test d'émulation.

2. Dispositif selon la revendication 1, **caractérisé en ce que** le module de communication (202) comprend :
un sous-module d'analyse syntaxique de commande, configuré pour analyser syntaxiquement la commande de test d'émulation et acquérir des informations à tester ;
un sous-module d'acquisition d'informations, configuré pour acquérir le type du port DSLAM à tester ou les informations de MODEM à tester, en fonction des informations à tester acquises par le sous-module d'analyse syntaxique de commande ;
un sous-module d'avis d'informations, configuré pour informer le dispositif de saisie de ligne qu'il faut connecter la ligne à tester au module de test en fonction du type du port DSLAM à tester ou des informations de MODEM, transmettre la commande de test d'émulation dont le type du port DSLAM à tester ou les informations de MODEM au module de test, et renvoyer le résultat de test reçu du module de test à l'initiateur de test.

3. Dispositif selon la revendication 1, **caractérisé en ce que** le module de test (204) comprend une unité de test de port DSLAM et une unité de test de MODEM, l'unité de test de port DSLAM étant configurée pour fonctionner comme le port DSLAM à tester, et l'unité de test de MODEM étant configurée pour fonctionner comme le MODEM à tester.

4. Dispositif selon l'une des revendications 1 à 3, **caractérisé en ce que** le module de test (204) comprend une pluralité de sous-modules de test xDSL, ou toute combinaison de tous les sous-modules de test xDSL.

5. Dispositif selon l'une des revendications 1 à 3, **caractérisé en ce que** le module de test (204) est configuré en outre pour effectuer un test d'émulation xTU-C ou un test d'émulation xTU-R.

6. Dispositif selon la revendication 2 ou 3, **caractérisé en ce que** le sous-module d'analyse syntaxique de commande est configuré en outre pour acquérir un numéro de série d'un châssis, emplacement et port de DSLAM auquel correspond la ligne à tester comme informations à tester.

7. Dispositif selon la revendication 2 ou 3, **caractérisé en ce que** le sous-module d'acquisition d'informations est configuré en outre pour acquérir le type de port DSLAM qui comprend tous les types de xDSL et les informations de MODEM qui sont les informations de xDSL supportés par un utilisateur connecté par l'intermédiaire du MODEM.

8. Procédé de test d'émulation, **caractérisé en ce qu'**il comprend les étapes suivantes :
acquérir (501), par un dispositif de test, des informations à tester en fonction d'une commande de test reçue, les informations à tester comprenant un numéro de série d'un châssis, emplacement et port de multiplexeur d'accès de ligne d'abonné numérique, DSLAM, correspondant à une ligne à tester ;
communiquer (502), par le dispositif de test, avec le DSLAM pour acquérir un type du port DSLAM à tester ou des informations de MODEM en fonction du numéro de série du DSLAM ;
informer (504), par le dispositif de test, un dispositif de saisie de ligne qu'il faut connecter une ligne à tester au dispositif de test, exécuter le test d'émulation en fonction des informations à tester et du type du port DSLAM à tester ou en fonction des informations à tester et des informations de MODEM ; et
rapporter (506) un résultat de test.

9. Procédé selon la revendication 8, **caractérisé en ce qu'**il comprend en outre :
déterminer, par le dispositif de test, si le dispositif de test comporte ou non un sous-module de test correspondant au type du port DSLAM à tester ou aux informations de MODEM ;
exécuter le test d'émulation si le dispositif de test comporte le sous-module de test correspondant au type du port DSLAM à tester ou aux informations de MODEM ;
renvoyer un rapport de test comportant une valeur représentative de la cause de la défaillance si le dispositif de test ne comporte par le sous-module de test correspondant au type du port DSLAM à tester ou aux informations de MODEM.

10. Procédé selon la revendication 9, **caractérisé en ce que** le type du port DSLAM à tester est n'importe quel type de xDSL ; et les informations de MODEM sont les informations de xDSL supportés par l'utilisateur connecté par l'intermédiaire du MODEM.

11. Procédé selon l'une quelconque des revendications 9 à 10, **caractérisé en ce que** le test d'émulation est un test d'émulation xTU-C ou xTU-R.
